# EUROPÄISCHE PATENTSCHRIFT

(11) **EP 2 912 525 B1**
(45) Veröffentlichungstag und Bekanntmachung des Hinweises auf die Patenterteilung: **27.09.2017**
(21) Anmeldenummer: 13783520.3
(22) Anmeldetag: 24.10.2013
(51) Int. Cl.: G05B 19/042, H04L 12/10, G06F 13/40

(54) **BUSSYSTEM MIT WECHSELSPANNUNGSVERSORGUNG**
BUS SYSTEM HAVING ALTERNATING VOLTAGE SUPPLY
SYSTÈME DE BUS À ALIMENTATION EN TENSION ALTERNATIVE

(30) Priorität: 24.10.2012 DE 102012110172
(43) Veröffentlichungstag der Anmeldung: 02.09.2015
(73) Patentinhaber: Phoenix Contact GmbH & Co. KG, 32825 Blomberg (DE)
(72) Erfinder: KALHOFF, Johannes, 32825 Blomberg (DE); SCHOLZ, Peter, 33034 Brakel (DE); WIMMER, Lars-Peter, 31787 Hameln (DE)
(74) Vertreter: Blumbach Zinngrebe
(86) Internationale Anmeldenummer: PCT/EP2013/072307
(87) Internationale Veröffentlichungsnummer: WO 2014/064211

(56) Entgegenhaltungen:
- US-A1- 2002 060 918
- US-B1- 6 396 391

## Beschreibung

### Gebiet der Erfindung

Die Erfindung bezieht sich auf ein Kommunikationssystem zwischen einzelnen Teilnehmergeräten und gegebenenfalls einer zentralen Datenverarbeitungseinrichtung bei Stromversorgung über ein Busleitungssystem.

### Hintergrund der Erfindung

Bei der Mehrzahl der auf dem Markt befindlichen Bussysteme gibt es ein Zentral-Busmodul, das die Wechselspannung des öffentlichen Netzes in eine Gleichspannung umwandelt und diese Gleichspannung auf Energieversorgungsleitungen des Bussystems legt. Von dort wird die Gleichspannung von den einzelnen Teilnehmergeräten des Bussystems abgegriffen und in eine Wechselspannung umgewandelt, die einem Transformator oder Wandler zugeführt wird, um anschließend wiederum in eine Gleichspannung zu Versorgungszwecken des Elektronikteils des Teilnehmergeräts gewandelt und gegebenenfalls geregelt zu werden. Wird ein Transformator verwendet, sind die Teilnehmergeräte galvanisch von der zentralen Stromversorgung getrennt, was einer häufig gestellten Forderung bei der Anwendung derartiger Geräte nachkommt. Andererseits ist der Gesamtaufwand des Kommunikationssystems bei vielen Teilnehmern erheblich, weil für jeden der Teilnehmer gleichartige Geräteteile zur Verfügung gestellt werden müssen. Teilnehmergeräte besitzen gewöhnlich ein äußeres Gehäuse, dessen Inneres nur einen beschränkten Raum für Geräteteile zur Verfügung stellt.

Auch aus diesem Grunde ist die Einsparung von Geräteteilen innerhalb der Gehäuse von Teilnehmergeräten erwünscht.

Das bekannte Kommunikationssystem ist somit problematisch unter Gesichtspunkten wie:
- Platzbedarf für den Anschluss eines Elektronikmoduls innerhalb eines Gerätegehäuses,
- Aufwand für die im Rahmen von Richtlinien für elektrische Sicherheit benötigte galvanische Trennung innerhalb des Teilnehmergerätes, oder
- Aufwand für die Energieeinspeisung der Elektronikmodule.

Aus DE 198 44 394 B4 ist ein Zweileiter-Bussystem zur Übertragung von Daten zwischen Stationen mit Sendeschaltung und Empfangsschaltung bekannt, das an den Bus Wechselspannung anlegt, die mittels eines Leistungsauskopplers aufgenommen und der Station zur Verfügung gestellt wird. Zur Datensendung werden der Wechselspannung Gleichstromanteile überlagert, deren Frequenz kleiner als die Frequenz der Wechselspannung ist.

Aus EP 0 355 532 A2 ist eine Anordnung zum Übertragen von Daten und einer gleichgerichteten Versorgungsspannung über ein Busleitungspaar bekannt, bei der die Teilnehmergeräte je mittels eines Übertragers an das Busleitungspaar angeschlossen sind. Die Datensignale werden über Spulen-Kondensator-Schaltungen in das Busleitungspaar ein- und ausgekoppelt.

Aus DE 102 16 330 B4 ist eine Messeinrichtung für die Prozesstechnik mit einem Bussystem bekannt, bei dem eine Zentraleinheit mehrere Module versorgt und eine Rückkopplungseinheit vorgesehen ist, die die Versorgungsspannung beeinflusst.

Aus DE 10 2009 003 846 A1 ist ein System zur berührungslosen Daten- und Energieversorgung von auf einer Montagebasis aneinanderreihbaren Busteilnehmermodulen bekannt. Die Montagebasis besteht aus einer Montageschiene und einer Versorgungsschiene, wobei letztere aus primärseitigen Flachspulen aufgebaut ist, die mit kürzeren sekundärseitigen Flachspulen von Busteilnehmermodulen zusammenarbeiten. Auf diese Weise können die Busteilnehmermodule längs der Versorgungsschiene an beliebiger Stelle angeordnet werden und sind nicht auf Raststellen der Trageschiene angewiesen. Die primärseitige Flachspule wird über einen Gateway-Aufbau mit Energie und Datensignale versorgt, und zwar induktiv über entsprechende Spulen. Von der Busebene, die aus Leitungen aufgebaut sein dürften, gibt es eine Busebene-Schnittstelle zu einem Gateway-Modul.

Aus DE 10 2010 016 865 A1 ist ein Tragschienenbussystem mit einer Tragschiene und einem darin angeordneten Stationsbus bekannt, der aus miteinander verbundenen Busgliedern besteht. Modulförmige Busteilnehmer können über Kontaktstifte und eine Leiterplatte mit Leiterbahnen zur Übertragung elektrischer Daten- und/oder Steuersignale verbunden werden.

Aus DE 198 13 364 A1 ist eine Energieversorgung für ein Steuerungssystem bekannt, das eine Masterstation und dezentrale Stationen aufweist. Die Masterstation wird über einen Transformator mit Wechselspannung vom Netz her versorgt, das bekanntlich 50 bzw. 60 Hz ausweist. Von der Masterstation führen zweiadrige Datenleitungen und Energieversorgungsleitungen zu den dezentralen Stationen. Es ist anzunehmen, dass dort die Wechselspannung in Gleichspannung zur Versorgung von Elektronik in den dezentralen Stationen umgewandelt wird. Der Platzbedarf für die Energieeinspeisung der Elektronikmodule innerhalb der dezentralen Stationen ist erheblich.

Aus US 6,396,391 B1 ist ein Kommunikationssystem mit Teilnehmern bekannt, bei dem die Teilnehmer mit Gleichstrom über Energieversorgungsleitungen des Kommunikationsbusses versorgt werden. Eine galvanische Trennung zwischen der Energieversorgung und den Teilnehmergeräten wird nicht offenbart.

US 2002/0060918 A1 offenbart kontaktlose Verbinder in Hochfrequent-Wechselstrom-Verteilsystemen, wobei die Systemstromversorgung über diese kontaktlosen Verbinder Bussysteme mit Wechselstrom versorgt. Eine unmittelbare Verbindung, ohne solche kontaktlose Verbinder, wird nicht offenbart.

### Allgemeine Beschreibung der Erfindung

Der Erfindung liegt die Aufgabe zugrunde, ein Kommunikationssystem bereitzustellen, mittels welchem eine kostengünstige und platzsparende Energieversorgung der Teilnehmergeräte ermöglicht wird.

Diese Aufgabe wird durch den Gegenstand der unabhängigen Ansprüche gelöst. Vorteilhafte Ausgestaltungen und Weiterbildungen sind in den abhängigen Ansprüchen angegeben. Die Merkmale der Weiterbildungen können, soweit technisch sinnvoll, miteinander kombiniert werden.

Ein Aspekt der Erfindung betrifft den modularen Charakter des Kommunikationssystems, das gewöhnlich für mehrere Teilnehmergeräte ausgelegt ist.

Hierbei kann "modular" bedeuten, dass das Teilnehmergerät in das Bussystem eingefügt und aus dem Bussystem herausgenommen werden kann, ohne dass die Funktionalität des Kommunikationssystems dadurch beeinflusst oder beeinträchtigt wird. "Modular" kann auch bedeuten, dass die Funktionen des Teilnehmergeräts mittels Erweiterungskarten erweitert werden können, so dass das Teilnehmergerät nicht schon in der Fertigungsphase mit allen Funktionen ausgestattet werden muss.

Das Bussystem kann folgende Elemente umfassen:
- einen Träger, an dem die Teilnehmergeräte befestigt sind,
- ein Versorgungsmodul zur Bereitstellung elektrischer Energie an die Teilnehmergeräte, und
- einen Bus zum Übertragen der elektrischen Versorgungsenergie und/oder Datensignale an die Teilnehmergeräte.

Die elektrische Versorgungsenergie wird vorzugsweise als eine hochfrequente Spannung ausgebildet, um zur galvanischen Trennung benötigte Wandler oder Transformatoren klein halten zu können. Hochfrequent bezeichnet in Kontext dieser Erfindung Frequenzen im kHz (Kilohertz) Bereich und höher bis in den zweistelligen MHz-Bereich.

Es wird vorteilhaft nur ein Versorgungsmodul für alle Teilnehmergeräte benötigt, die an den Bus angeschlossen sind. Die Teilnehmergeräte können infolge von Wandlern oder Transformatoren galvanisch vom Versorgungsmodul getrennt werden. Dabei kann jedes Teilnehmergerät mit einem anderen Teilnehmergerät oder mit dem Versorgungsmodul durch Übertragen von Nachrichten kommunizieren.

Der Träger kann eine Profilschiene aus Metall sein, die zur Befestigung der Teilnehmergeräte dient. Im Profilinneren der Tragschiene können Leitungsadern als Teil eines Rangiersystem des Bussystems verlaufen, um die Speisespannung und/oder die Kommunikationssignale zwischen den Teilnehmergeräten zu übermitteln.

Der Träger kann als eine Hutschiene mit U-förmigem Profil ausgebildet sein, beispielsweise eine TS-35 oder DIN-Schiene darstellen. Im Englischen wird die Hutschiene als eine "DIN Rail" bezeichnet, die Abmessungen von 35 x 7,5 mm aufweist.

Das Bussystem kann ein flexibles Kabel aufweisen, an dessen Adern die Teilnehmergeräte mittels Piercing oder Trennsteckern angeschlossen sind.

Das Bussystem kann mehrere Parallelleiter aufweisen, an die die Teilnehmergeräte mittels Kontaktierung angeschlossen sind und durch die Kontaktierung die Verbindungsmodule 116 gebildet werden.

Die zentralisierte Architektur des Bussystems, gemäß welcher die Versorgung der Teilnehmergeräte mit Wechselspannung (AC: Alternating Current), vorzugsweise elektrischer HF-Energie (HF: Hochfrequenz) an zentraler Stelle mittels des Versorgungsmoduls ausgeführt ist, hat eine Vielzahl von Vorteilen:
- reduzierter Aufwand für die Energieversorgung eines Teilnehmers, da das Netzteil aus dem Teilnehmergerät in das Versorgungsmodul ausgelagert werden kann,
- reduzierter Platzbedarf für die elektronischen Schaltkreise in dem Teilnehmergerät,
- falls erwünscht, eine galvanische Trennung des Teilnehmergeräts von dem Versorgungsmodul,
- reduzierter Aufwand für das elektrische und mechanische Ankoppeln eines Teilnehmergeräts an den Bus.

Ein weiterer Aspekt der Erfindung betrifft ein Teilnehmergerät für das erfindungsgemäße Bussystem, umfassend eine Wechselstrom-Gleichrichterschaltung, vorzugsweise einen HF/DC Wandler für die Energieversorgung von Elektronikkomponenten des Geräts. Das Teilnehmergerät kann insbesondere ein Messgerät oder ein Automatisierungsmodul sein.

Vorteilhafter Weise kann die Energieversorgung des Teilnehmers besonders platzsparend aufgebaut werden, da die übliche DC/HF/DC Wandlung, wie sie beispielsweise in Schaltnetzteilen bisheriger Teilnehmergeräte vorkommt, nicht benötigt wird.

Die nachfolgenden Weiterbildungen und Ausführungsformen der Erfindung können, sofern technisch sinnvoll, mit jedem der Aspekte der Erfindung kombiniert werden.

Gemäß einer Ausführungsform kann der Bus auf einem Verteilkabel basieren, das vorzugsweise in einem Träger verläuft oder an diesem angeordnet ist.

Der Übertragungsweg des Datensignals ist vom Übertragungsweg der Versorgungs-Wechselspannung verschieden. Das Datensignal und die VersorgungsWechselspannung werden vorzugsweise über unterschiedliche Leitungen übertragen. Das Bussystem kann auch auf einem hybriden Übertragungsweg basieren, der eine elektrische Leitung und eine Funkstrecke umfasst. So kann vorzugsweise die Versorgungs-Wechselspannung über die elektrische Leitung und das Datensignal über die Funkstrecke übertragen werden.

Gemäß einer Ausführungsform kann einer oder jeder der Teilnehmer als ein Elektronikmodul, vorzugsweise ein Messgerät oder Steuergerät, oder als ein elektrisches Betriebsmittel, beispielsweise ein Relais, Stromstoßschalter, Zeitschaltuhr, Trennverstärker oder Sicherungsautomat, ausgebildet sein.

Gemäß einer Ausführungsform umfasst das Versorgungsmodul ein Verbindungsmodul zum Anschluss des Busleitungssystems an die Versorgungs-Wechselspannung. Dies bedeutet eine galvanische Verbindung zwischen Versorgungsmodul und Busleitungssystem. Hierzu kann das Verbindungsmodul als ein Stecker, T-Bus Element oder T-Bus Stecker ausgebildet sein, wodurch die Verbindung durch einen elektrischen Kontakt hergestellt wird.

Das Versorgungsmodul kann einen AC/AC Wandler oder DC/AC Wandler umfassen, um die Versorgungs-Wechselspannung, vorzugsweise im Hochfrequenzbereich zwischen 100 und 500 kHz, bereitzustellen.

Das Bussystem umfasst ein Verbindungsglied zum Anschluss der Versorgungs-Wechselspannung aus dem Bus zu dem Teilnehmergerät.

Das Verbindungsglied verbindet die VersorgungsWechselspannung, vorzugsweise Hochfrequenzspannung der Energieversorgungsleitungen des Bussystems galvanisch mit dem jeweiligen Teilnehmergerät. Hierzu kann das Verbindungsglied als ein Stecker, T-Bus Element oder T-Bus Stecker ausgebildet sein, wodurch ein elektrischer Kontakt zwischen Busleitungen und Geräteleitungen hergestellt wird.

Das Verbindungsglied kann an dem als Hutschiene ausgebildeten Träger angeordnet sein.

Gemäß einer Ausführungsform kann das Teilnehmergerät ein Datenkoppelmodul umfassen, um das Datensignal in den Bus ein- und auszukoppeln. Das Datensignal und die VersorgungsWechselspannung (Hochfrequenzspannung) werden in dem Bus separat geführt. Innerhalb des Trägers kann das Busleitungssystem als ein Rangiersystem von Leitungsadern ausgebildet sein.

Die Erfindung wird nachfolgend anhand von Ausführungsbeispielen und unter Bezugnahme auf die Zeichnungen näher erläutert. Dabei verweisen gleiche Bezugszeichen auf gleiche oder entsprechende Elemente. Die Merkmale verschiedener Ausführungsbeispiele können miteinander kombiniert werden.

### Kurzbeschreibung der Figuren

Es zeigen:
- Fig. 1: eine schematische Darstellung einer ersten Ausführungsform des erfindungsgemäßen Kommunikationssystems,
- Fig. 2: eine schematische Darstellung einer zweiten Ausführungsform des erfindungsgemäßen Kommunikationssystems,
- Fig. 3: eine Darstellung von Einzelheiten des erfindungsgemäßen Kommunikationssystems,
- Fig. 4: eine Einzelheit zur galvanischen Trennung,
- Fig. 5: ein Elektronikmodul zusammen mit einem T-Bus Stecker, und
- Fig. 6: einen T-Bus Stecker.

### Detaillierte Beschreibung der Erfindung

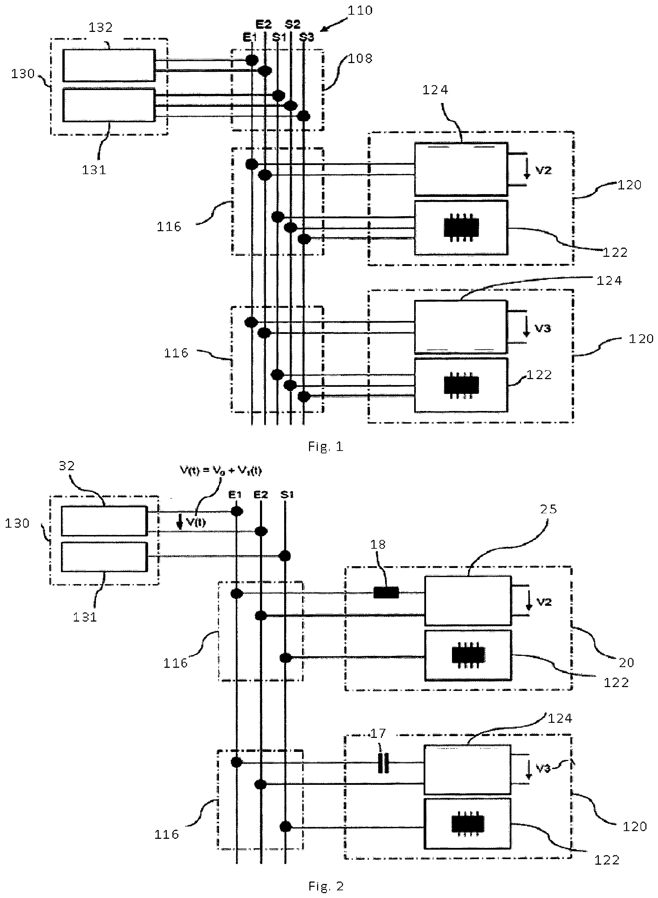

Die Fig. 1 zeigt eine erste Ausführungsform des erfindungsgemäßen Kommunikationssystems, an dem eine Vielzahl von Teilnehmergeräten 120 angeschlossen sind.

Die Hauptteile des Kommunikationssystems sind ein Busleitungssystem 110, ein zentrales Busmodul 130 und Teilnehmergeräte 120. Das zentrale Busmodul 130 ist über ein Verbindungsmodul 108 an das Busleitungssystem 110 angeschlossen. Je ein Verbindungsmodul 116 ist zur Verbindung der jeweiligen Teilnehmergeräte 120 mit dem Busleitungssystem 110 vorgesehen. Das Busleitungssystem 110 umfasst Energieversorgungsleitungen E1 und E2 sowie Signalleitungen S1, S2 und S3. Das zentrale Busmodul 130 setzt sich aus einem zentralen Stromversorgungsgerät 132 und gegebenenfalls einer zentralen Datenverarbeitung 131 zusammen, wenn das Bussystem mit einer zentralen Datenverarbeitung ausgestattet ist. Das Stromversorgungsgerät 132 und die zentrale Datenverarbeitung 131 sind über das Verbindungsmodul 108 mit dem Busleitungssystem 110 verbunden. Das zentrale Stromversorgungsgerät 132 ist zur Abgabe von Versorgungs-Wechselspannungen an die Energieversorgungsleitungen E1 und E2 eingerichtet. Die zentrale Datenverarbeitung 131 dient zur Speicherung und Darbietung von Daten für die Teilnehmergeräte 120 und kann auch für die Steuerung der Kommunikation eingerichtet sein.

Die Besonderheit bei der Erfindung besteht darin, dass das zentrale Stromversorgungsgerät 132 eine hochfrequente Versorgungs-Wechselspannung zwischen den Energieversorgungsleitungen E1 und E2 anlegt und die einzelnen Teilnehmergeräte 120 diese VersorgungsWechselspannung abgreifen und einer Wechselstrom-Gleichrichterschaltung 124 zuführen, die für eine gleichgerichtete Versorgungsspannung der Teilnehmergeräte 120 sorgt. Die Versorgungs-Wechselspannung soll Frequenzen im kHz-Bereich bis in den zweistelligen MHz-Bereich umfassen. Bevorzugt wird ein Bereich zwischen 100 und 500 kHz.

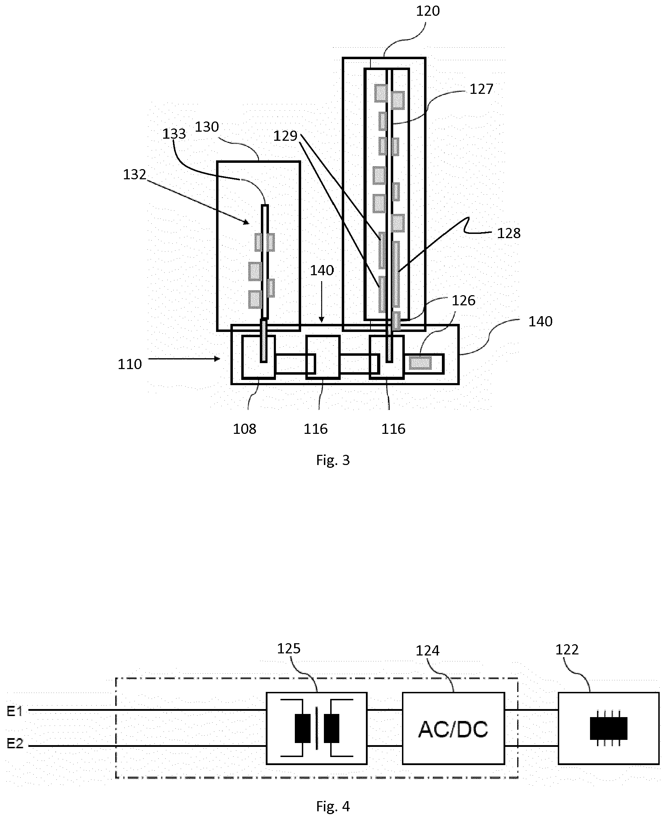

Jedes Teilnehmergerät 120 umfasst auch mindestens ein Elektronikmodul 122, das mindestens eine Gleichspannung zur Energieversorgung benötigt. In Fig. 4 ist eine modulartige AC/DC Gleichrichterschaltung 124 skizziert, die das Elektronikmodul 122 mit geeignetem Gleichstrom versorgt. Dabei ist der AC/DC Gleichrichterschaltung 124 eine Transformationsstelle 125 vorgeschaltet, die als galvanische Trennung des zentralen Busmoduls 130 vom Teilnehmergerät 120 sorgt. Auch die Signalleitungen S1, S2, S3 können über eine Transformationsstelle (nicht dargestellt) zwecks galvanischer Trennung zum Elektronikmodul 122 geführt werden.

Wenn eine galvanische Trennung nicht benötigt wird, kann die Versorgungs-Wechselspannung der AC/DC-Gleichrichterschaltung 124 unmittelbar zugeführt werden.

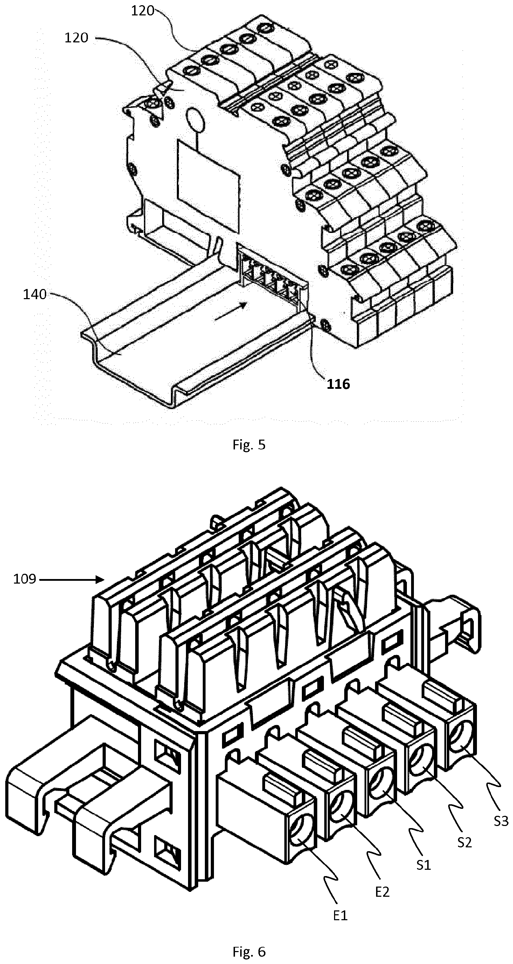

In der Praxis werden Teilnehmergeräte 120 häufig nebeneinander in Form von Steckergehäusen (Fig. 5) angeordnet. Die Geräte werden auf einem Träger, beispielsweise der gezeigten Hutschiene 140, durch Aufstecken befestigt. Hierfür eignen sich Stecker wie beispielsweise T-Bus Stecker 109 (Fig. 6), die jeweils Verbindungsmodule 116 in dem Kommunikationssystem bilden, im besonderen Maße. Diese klemmen sich an die Leitungsadern der Energieversorgungsleitungen E1, E2 und der Signalleitungen S1, S2, S3 des Busleitungsystems 110 an, das sich unterhalb der T-Bus Stecker 109 entlang des Inneren der Hutschiene 140 erstreckt (nicht dargestellt). Auch das zentrale Busmodul 130 kann über ein Verbindungsmodul 108 an dem Busleitungssystem 110 angeschlossen sein und an der Hutschiene 140 als Träger befestigt sein. Die nebeneinander angeordneten Verbindungsmodule 116 bilden in ihrer Reihung ein Teil des Busleitungssystem 110.

Die weiteren Komponenten des Kommunikationsteilnehmers 120, die für die Erfindung nicht relevant sind, sind in den Figuren nicht aufgezeigt.

Die zentralisierte Architektur des Kommunikationssystems, gemäß welcher die Versorgung der Teilnehmergeräte 120 mit elektrischer Wechselstrom-Energie an zentraler Stelle durch das Stromversorgungsmodul 132 ausgeführt wird, ermöglicht eine erhebliche Platzersparnis beim Aufbau des Teilnehmergeräts 120, da mehrfache Wechselspannungsumwandlungen bei üblichen Bussystemen entfallen. Das zentrale Busmodul 130 liefert VersorgungsWechselspannung in das Bussystem 110 direkt und vermeidet dadurch eine sonst übliche DC/AC/DC-Wandlung bzw. DC/HF/DC-Wandlung in jedem Teilnehmergerät 120, wie es beispielsweise bei Schaltnetzteilen bzw. DC/DC-Wandlern der Fall ist.

Die Fig. 2 zeigt eine zweite Ausführungsform des erfindungsgemäßen Kommunikationssystems. Bei diesem wird die Datenübertragung über eine Datenleitung S1 angedeutet, obzwar mehrere Datenleitungen vorhanden sein können. An das Bussystem soll aber auch ein konventionelles Teilnehmergerät 20 angeschlossen werden können, dem über die Leitungen E1, E2 Gleichstrom zuzuführen ist. Ein solches Gerät 20 umfasst, wenn es für galvanische Trennung ausgelegt ist, ein Wandler-Modul 25, das einen DC/AC-Wandler, einen Trenntransformator und einen AC/DC-Wandler, enthält. Die Funktionalität kann auch in einem Schaltnetzteil mit integrierter galvanischer Trennung als DC/HF/DC Wandlung ausgeführt werden. Das Bussystem der Fig. 2 umfasst ein Stromversorgungssystem 32, welches eine mit Gleichspannung V₀ überlagerte Versorgungswechselspannung V₁(t) liefert. Um den Versorgungsgleichstrom abzutrennen, ist dem Modul 25 ein Tiefpass 18 vorgeschaltet, so dass das konventionelle Gerät 20 auch an das neuartige Bussystem angeschlossen werden kann.

Das Teilnehmergerät 120 kann an das Bussystem der Fig. 2 über einen Hochpass 17 angeschlossen werden, da über einen solchen die Wechselspannungen des Stromversorgungssystems 32 gelangen.

Wie anhand der Fig. 1 und 2 beschrieben, betrifft die Erfindung ein Mehrleiter-Bussystem mit getrennten Leitungen für Energie E1, E2 und für Daten oder Signale S1, S2, S3. Es werden mindestens zwei Leitungen E1, E2 für die Energieversorgung eingesetzt. Die Energieversorgung beinhaltet mindestens einen Wechselspannungsanteil, wie durch die Formel V(t) = V₀ + V₁(t) angegeben. Mindestens eine Leitung S1 ist für die Daten/Signalübertragung vorgesehen. Die Datenübertragung kann separate Energieversorgungsleitungen besitzen. In der bevorzugten Ausführungsform enthält das Bussystem Verbindungsmodule, die aus steckbaren, identischen Elementen bestehen. Die Verbindungsmodule werden über Steckverbindungen kontaktiert. Die Energieversorgung kann als Zweileitersystem aufgebaut sein, es ist aber auch möglich, ein symmetrisches Dreileitersystem zu benutzen.

Die vom zentralen Stromversorgungsgerät 132 gelieferte Versorgungs-Wechselspannung kann 50 Hz betragen und sinusförmig ausgeprägt sein. Auch andere periodische Spannungsverläufe wie rechteckförmige oder trapezförmige Spannungsverläufe können verwendet werden. Dabei können Spannungsverläufe mit unterschiedlicher Kombination verschiedener Frequenzanteile verwendet werden. Es werden Frequenzen im kHz-Bereich bis in den zweistelligen MHz-Bereich verwendet, bevorzugt im Bereich von 100 bis 500 kHz. Bauteile des Systems wie Transformatoren und Leistungselektronik sind für diesen Frequenzbereich besonders kostengünstig und platzsparend herstellbar.

Wie beschrieben, kann der Versorgungs-Wechselspannung auch eine Gleichspannung überlagert sein. In diesem Zusammenhang soll mit dem Begriff "Wechselspannung" auch ein nicht periodisches Signal, das beispielsweise stochastische Anteile beinhalten kann, eingeschlossen sein. Im Allgemeinen werden jedoch periodische Versorgungs-Wechselspannungen mit sinus-, trapez- oder rechteckförmiger Grundform bevorzugt.

Die Architektur des Kommunikationssystems ist in Fig. 1 und Fig. 2 dargestellt. Das zentrale Stromversorgungsteil 132 wandelt die bereitstehende Eingangsspannung, z. B. die Netzspannung, in die Versorgungs-Wechselspannung (z. B. 6 V bei 200 kHz) um. Diese Versorgungs-Wechselspannung liegt mit den Datensignalen auf den entsprechenden Leitungen E1, E2 bzw. S1, S2, S3 des Busleitungssystems 110 an. Mittels Steckern (Fig. 6 T-Bus Stecker 109) werden die Versorgungswechselspannung und die Datensignale an die einzelnen Teilnehmergeräte 120 geliefert. Innerhalb der Teilnehmergeräte 120 können zur galvanischen Trennung AC/AC-Wandler 125 vorgesehen sein, die aus einem Transformator oder gekoppelten Spulen bestehen. Die Wandler 125 können jeweils unterschiedliche Spannungsebenen und Potentialgruppen aufweisen, indem Spulen mit unterschiedlichen Windungszahlen für den Aufbau der Wandler 125 gewählt werden.

Alternativ kann die Versorgungs-Wechselspannung auch über eine kapazitive Schnittstelle ausgekoppelt werden.

Mit oder ohne galvanische Trennung erfolgt eine Gleichrichtung in der Wechselstrom-Gleichrichterschaltung 124. Gegebenenfalls wird nachgeregelt und somit Gleichstrom an die elektronischen Bauteile 122 des Teilnehmergeräts 120 geliefert.

Der Vorteil der erfindungsgemäßen Architektur besteht darin, dass die DC/AC Umwandlung aus konventionellen Teilnehmergeräten 20 in das zentrale Busmodul 130 verlagert wird, so dass die DC/AC Umwandlung nur ein einziges Mal durchgeführt wird. Durch diese Auslagerung kann innerhalb der Gehäuse der Teilnehmergeräte 120 Platz gewonnen werden und es können Kosten eingespart werden.

Fig. 3 zeigt Einzelheiten des Kommunikationssystems gemäß Erfindung. Das zentrale Busmodul 130 beinhaltet den zentralen Stromversorgungsteil 132, der die Netzspannung oder eine andere zugeführte Spannung in die VersorgungsWechselspannung umwandeln kann, die in das Busleitungssystem 110 eingespeist wird. Das Stromversorgungsteil 132 umfasst eine Leiterplatte 133, deren Leiter mit einem Verbindungsmodul 108 elektrisch verbunden sind. Das Verbindungsmodul 108 gehört mit den anderen Verbindungsmodulen 116 dem Busleitungssystem 110 an.

In Fig. 3 ist auch ein Teilnehmergerät 120 dargestellt. Dieses ist an ein Verbindungsmodul 116 unter Überbrückung eines anderen Verbindungsmoduls 116 angeschlossen. (Nicht jedes Verbindungsmodul 116 versorgt ein zugehöriges Teilnehmergerät.) Das dargestellte Teilnehmergerät 120 weist eine bestückte Leiterplatte 127 auf, die eine Primärspule 128 und zwei Sekundärspulen 129 trägt, welche die Versorgungs-Wechselspannung aus dem Busleitungssystem 110 für das Teilnehmergerät 120 entnehmen. Wenn damit gerechnet werden muss, dass die Versorgungs-Wechselspannung durch parasitäre Einflüsse gestört wird, kann man Hilfselektroniken als Regler 126 vorsehen, die regelnd auf die Übernahme der Versorgungsspannungen einwirken.

Die Anzahl der Verbindungsmodule 116 kann der Anzahl der Teilnehmergeräte 120 entsprechen, d. h. an jedes Verbindungsmodul 116 kann ein Teilnehmergerät 120 angeschlossen werden, muss es aber nicht. Es ist auch möglich, dass ein Verbindungsmodul 116 mehrere Teilnehmergeräte versorgt, wenn es dementsprechend eingerichtet ist.

Fig. 4 zeigt eine mögliche Gestaltungseinzelheit zu Fig. 1, nämlich die Stromversorgung des Elektronikmoduls 122 mit galvanischer Trennung zum zentralen Stromversorgungsteil 132 mittels des AC/AC Wandlers 125, der die AC/DC Gleichrichterschaltung 124 bestromt, welche wiederum das Elektronikmodul 122 versorgt.

Fig. 5 zeigt eine Hutschiene 140, die als Träger für einzelne Teilnehmergeräte 120 dient, die auf die Hutschiene 140 nebeneinander aufgesteckt sind. Nicht dargestellt sind die Energieversorgungsleitungen und Signalleitungen des Busleitungssystems, die sich zwischen Unterseite der Teilnehmergeräte 120 bzw. den T-Bus Stecker 109 und dem Schienengrund entlang des Inneren der Hutschiene 140 erstrecken. Das Verbindungsmodul 116 bzw. der T-Bus Stecker 109 umgreift und kontaktiert die einzelnen Leitungen des Busleitungssystems 110.

Man kann die in Fig. 5 dargestellten T-Stecker auch als lediglich Teile der Teilnehmergeräte auffassen, wobei sich zwischen den dargestellten Steckern und dem Komplettgerät 120 noch Verbindungsleitungen erstrecken.

In Fig. 6 ist ein T-Bus-Stecker 109 dargestellt, der als Verbindungsmodul 116 verwendet werden kann. Das dargestellte Gehäuse weist einen Steckschlitz für eine Elektronikkarte auf, die z. B. einen wesentlichen Teil des zentralen Busmoduls 130 bildet. Skizziert sind die Leitungen E1, E2, S1, S2 und S3, die von dem zentralen Busmodul 130 ausgehen und in Kanälen enden, die sich längs des Inneren der Hutschiene 140 erstrecken, wenn der T-Busstecker 109 mit einer solchen Hutschiene 140 gekoppelt wird.

Es werden folgende Vorteile erzielt:
- Die einheitliche Energieversorgung mit Wechselspannung aller am Busleitungssystem 110 angeschlossenen Teilnehmer 120,
- die Nutzung vorhandener Verteilsysteme wie zum Beispiel dem Phoenix Contact T-Bus,
- die Eliminierung des primären Netzgerätes aus jedem elektronischen Teilnehmergerät in Verhältnis zu konventionellen Teilnehmergeräten,
- die einfache Kontaktierung und Zu-/Abschaltung der Einspeisung der elektronischen Teilnehmergeräte durch Ein/Ausstecken in das Bussystem, das ein Rangiersystem der Busleitungen darstellt,
- Standardisierung der Einspeisungselektronik der Teilnehmergeräte, sowie
- Standardisierung der Regelelektronik des zentralen Busmoduls.
- Das System kann sowohl in mechanisch starren Systemen wie zum Beispiel einer DIN Schiene, als auch in flexiblen verkabelten Systemen (zum Beispiel Rund-/Flachkabeln mit Piercing, Trennstecker, ...) Verwendung finden.

### Bezugszeichen

- 17: Hochpass
- 18: Tiefpass
- 20: konventionelles Teilnehmergerät
- 25: Wandler-Modul
- 32: Stromversorgungssystem
- 108: Verbindungsmodul
- 109: T-Bus Stecker
- 110: Busleitungssystem
- 116: Verbindungsmodul
- 120: Teilnehmergerät
- 122: Elektronikmodul
- 124: AC/DC Gleichrichterschaltung
- 125: AC/AC Wandler, Transformationsstelle
- 126: Regler
- 127: bestückte Leiterplatte
- 128: Primärspule
- 129: Sekundärspule
- 130: zentrales Busmodul
- 131: zentrale Datenverarbeitung
- 132: zentrales Stromversorgungsteil
- 133: Leiterplatte
- 140: Tragschiene, Hutschiene
- E1, E2: Energieversorungsleitungen
- S1-S3: Signalleitungen

## Patentansprüche

1. Kommunikationssystem umfassend:
- ein Busleitungssystem (110) mit voneinander getrennten Energieversorgungsleitungen (E1, E2) und Signalleitungen (S1, S2, S3),
- mindestens ein zentrales Busmodul (130) mit einem zentralen Stromversorgungsteil (132), das über Stromleitungen mit dem Busleitungssystem (110) verbunden ist, wobei der zentrale Stromversorgungsteil (132) zur Abgabe von Versorgungs-Wechselspannungen mit Frequenzen im kHz-Bereich und höher bis in den zweistelligen MHz-Bereich an die Energieversorgungsleitungen (E1, E2) eingerichtet ist und diese Versorgungs-Wechselspannungen unmittelbar auf die Energieversorgungsleitungen (E₁, E₂) gibt,
- eine Anzahl von Teilnehmergeräten (120), die jeweils mindestens ein Elektronikmodul (122) aufweisen und über die Signalleitungen (S1, S2, S3) miteinander kommunizieren können und die mit den Energieversorgungsleitungen (E1, E2) verbunden sind,
- wobei jedes Teilnehmergerät (120) eine Wechselstrom-Gleichrichterschaltung (124) aufweist, welche die Versorgungs-Wechselspannungen im kHz-Bereich und höher bis in den zweistelligen MHz-Bereich in für das zugeordnete Elektronikmodul (122) geeignete Versorgungsgleichspannungen umgewandelt und für das Elektronikmodul (122) bereitstellt.

2. Kommunikationssystem nach Anspruch 1, weiterhin umfassend einen Träger zur Aufnahme der Energieversorgungsleitungen (E1, E2) und zur Befestigung der Teilnehmergeräte (120) nebeneinander, wobei Verbindungsmodule (116) nebeneinander auf dem Träger angeordnet sind und zur Verbindung der Teilnehmergeräte (120) mit dem Busleitungssystem (110) vorgesehen sind.

3. Kommunikationssystem nach Anspruch 2, wobei die Verbindungsmodule (108, 116) in ihrer Reihung Teil des Busleitungssystems (110) bilden.

4. Kommunikationssystem nach Anspruch 2 oder 3, wobei wenigstens einige der Verbindungsmodule (116) im Zwischenraum einer den Träger bildenden Hut-Tragschiene (140) und körperlich jeweils verbunden mit einem T-Busstecker (109) untergebracht sind.

5. Kommunikationssystem nach einem der Ansprüche 1 bis 4, wobei eine Reglereinrichtung (126) zur Aufbereitung und Niveauregelung der Versorgungswechselspannung vorgesehen ist.

6. Kommunikationssystem nach einem der Ansprüche 1 bis 5, wobei das Elektronikmodul (122) eines Teilnehmergeräts (120) ein- und ausgangsseitig an die Signalleitungen (S1, S2, S3) und versorgungsseitig an die zugehörige Wechselstrom-Gleichrichterschaltung (124) angeschlossen ist.

7. Kommunikationssystem nach Anspruch 1, wobei ein flexibles Kabel als Teil des Busleitungssystems ausgebildet ist und als Träger von Leitungsverbindungen zu den Teilnehmergeräten dient.

8. Kommunikationssystem nach einem der Ansprüche 1 bis 7, wobei eine Transformationsstelle (125) der Wechselstrom-Gleichrichterschaltung (124) vorgeschaltet ist.

9. Kommunikationssystem nach einem der Ansprüche 1 bis 8, wobei die von dem zentralen Stromversorgungsteil abgegebene Versorgungs-Wechselspannung im Bereich von 100 bis 500 kHz liegt.

10. Kommunikationssystem nach einem der Ansprüche 1 bis 9, wobei der Versorgungs-Wechselspannung ein Gleichspannungsanteil überlagert ist.

11. Kommunikationssystem nach einem der Ansprüche 1 bis 10, wobei das zentrale Busmodul (130) einen zentralen Datenverarbeitungsteil (131) aufweist, der mit den Signalleitungen (S1, S2, S3) verbunden ist.

## Claims

1. A communication system, comprising:
- a bus line system (110) including separate power supply lines (E1, E2) and signal lines (S1, S2, S3);
- at least one central bus module (130) including a central power supply unit (132) connected to the bus line system (110) via power supply lines, wherein the central power supply unit (132) is adapted to supply AC supply voltages at frequencies in a kHz range and higher up into a two-digit MHz range to the power supply lines (E1, E2) and directly applies these AC supply voltages to the power supply lines (E1, E2);
- a number of subscriber devices (120), each one thereof comprising at least one electronic module (122) and being capable of communicating with each other via the signal lines (S1, S2, S3) and being connected to the power supply lines (E1, E2);
- wherein each subscriber device (120) includes an AC/DC rectifier circuit (124) which converts the AC supply voltages of the kHz range and higher up to the two-digit MHz range into DC supply voltages suitable for the associated electronic module (122) and provides them to the electronic module (122).

2. The communication system according to claim 1, further comprising a support for accommodating the power supply lines (E1, E2) and for fastening the subscriber devices (120) side by side, wherein connection modules (116) are arranged side by side on the support, which are intended for connecting the subscriber devices (120) to the bus line system (110).

3. The communication system according to claim 2, wherein the connection modules (108, 116) arranged side by side form part of the bus line system (110).

4. The communication system according to claim 2 or 3, wherein at least some of the connection modules (116) are accommodated in an intermediate space of a supporting hat rail (140) that defines the support and are physically connected to a respective T-bus connector (109).

5. The communication system according to any one of claims 1 to 4, wherein a control device (126) is provided for processing and for level control of the AC supply voltage.

6. The communication system according to any one of claims 1 to 5, wherein the electronic module (122) of a subscriber device (120) is connected on the input side as well as on the output side to the signal lines (S1, S2, S3) and is connected to the associated AC/DC rectifier circuit (124) on the power supply side.

7. The communication system according to claim 1, wherein a flexible cable is provided as part of the bus line system and serves as a carrier for connecting lines to the subscriber devices.

8. The communication system according to any one of claims 1 to 7, wherein a transformation point (125) is connected upstream of the AC/DC rectifier circuit (124).

9. The communication system according to any one of claims 1 to 8, wherein the AC supply voltage supplied by the central power supply unit is in a range from 100 to 500 kHz.

10. The communication system according to any one of claims 1 to 9, wherein the AC supply voltage has a DC component superimposed thereon.

11. The communication system according to any one of claims 1 to 10, wherein the central bus module (130) comprises a central data processing unit (131) which is connected to the signal lines (S1, S2, S3).

## Revendications

1. Système de communication, comprenant :
- un système de lignes de bus (110) à lignes d'alimentation en courant (E1, E2) séparées les unes des autres, et à lignes de signaux (S1, S2, S3),
- au moins un module de bus central (130) avec une section centrale d'alimentation en courant (132) reliée par des lignes électriques au système de lignes de bus (110), la section centrale d'alimentation en courant (132) étant prévue pour la fourniture aux lignes d'alimentation en courant (E1, E2) de tensions d'alimentation alternatives avec des fréquences dans la plage des kHz et plus, jusqu'à la plage des dizaines de MHz, et délivrant lesdites tensions d'alimentation alternatives directement aux lignes d'alimentation en courant (E1, E2),
- une pluralité d'appareils d'abonnés (120) présentant chacun au moins un module électronique (122) et aptes à communiquer entre eux via les lignes de signaux (S1, S2, S3), et reliés aux lignes d'alimentation en courant (E1, E2),
- dans lequel chaque appareil d'abonné (120) comprend un circuit redresseur de courant alternatif (124) qui transforme les tensions d'alimentation alternatives dans la plage des kHz et plus, jusqu'à la plage des dizaines de MHz, en des tensions d'alimentation continues adaptées pour le module électronique (122) correspondant et les rend disponibles pour le module électronique (122).

2. Système de communication selon la revendication 1, comprenant en outre un support pour la réception des lignes d'alimentation en courant (E1, E2) et pour la fixation des appareils d'abonnés (120) côte à côte, dans lequel des modules de connexion (116) sont disposés côte à côte sur le support et sont prévus pour connecter les appareils d'abonnés (120) au système de lignes de bus (110).

3. Système de communication selon la revendication 2, dans lequel, par leur alignement, les modules de connexion (108, 116) forment une partie du système de lignes de bus (110).

4. Système de communication selon la revendication 2 ou 3, dans lequel au moins quelques-uns des modules de connexion (116) sont mis en place dans l'espacement d'un profilé chapeau (140) formant le support et sont physiquement raccordés chacun à un connecteur de bus en T (109).

5. Système de communication selon l'une des revendications 1 à 4, dans lequel est prévu un dispositif de régulation (126) pour la préparation et la régulation du niveau de la tension d'alimentation alternative.

6. Système de communication selon l'une des revendications 1 à 5, dans lequel le module électronique (122) d'un appareil d'abonné (120) est raccordé côté entrée et côté sortie aux lignes de signaux (S1, S2, S3) et côté alimentation au redresseur de courant alternatif (124) correspondant.

7. Système de communication selon la revendication 1, dans lequel un câble flexible est prévu comme partie du système de lignes de bus et sert de support de connexions de lignes aux appareils d'abonnés.

8. Système de communication selon l'une des revendications 1 à 7, dans lequel un poste de transformation (125) est monté en amont du redresseur de courant alternatif (124).

9. Système de communication selon l'une des revendications 1 à 8, dans lequel la tension d'alimentation alternative fournie par la section centrale d'alimentation en courant est comprise entre 100 et 500 kHz.

10. Système de communication selon l'une des revendications 1 à 9, dans lequel la tension d'alimentation alternative est superposée à une composante de tension continue.

11. Système de communication selon l'une des revendications 1 à 10, dans lequel le module de bus central (130) comprend une section centrale de traitement des données (131) reliée aux lignes de signaux (S1, S2, S3).
